(19) Europäisches Patentamt
European Patent Office
Office européen des brevets

(11) **EP 3 181 873 B1**

(12) **EUROPEAN PATENT SPECIFICATION**

(45) Date of publication and mention
of the grant of the patent:
**14.04.2021 Bulletin 2021/15**

(51) Int Cl.:
***F02D 9/10*** *(2006.01)*  ***F16K 1/22*** *(2006.01)*

(21) Application number: **16204389.7**

(22) Date of filing: **15.12.2016**

(54) **BUTTERFLY VALVE**

DROSSELVENTIL

VANNE PAPILLON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2015 IT UB20159660**

(43) Date of publication of application:
**21.06.2017 Bulletin 2017/25**

(73) Proprietor: **Polypipe Italia Srl
16044 Cicagna (GE) (IT)**

(72) Inventor: **HOWARD, Simon
16044 CICAGNA (GE) (IT)**

(74) Representative: **Karaghiosoff, Giorgio
Alessandro
c/o Praxi Intellectual Property S.p.A. - Savona
Via F. Baracca 1R, 4° piano
"Il Gabbiano"
17100 Savona (IT)**

(56) References cited:
**WO-A1-98/46918** **WO-A1-2010/069780**
**DE-A1- 19 732 344** **DE-A1-102013 216 250**
**DE-U1- 9 402 114** **JP-A- 2006 105 094**
**US-A1- 2011 024 660** **US-B1- 6 170 461**

## Description

The present invention relates to a butterfly valve comprising a butterfly closure member cooperating with a valve seat, which valve seat has a substantially annular seal that, with the closure member in the closed position, adheres by a given compression force in the direction transversal to the direction of flow and/or to the axis of the valve seat against the head peripheral edge of the closure member and/or by a given compression force in the direction of flow against a front peripheral band, a diametral shaft rotatably supporting the closure member from a closed position wherein the closure member is placed transversely to the direction of flow and/or to the axis of the valve seat to a maximum open position with the closure member rotated by 90° with respect to said closed position.

This type of valves are known and widely used. The applicant, for example, market butterfly valves under the tradename EFFAST.

The operating mechanism of such valves is quite simple. The closure member practically is a circular disc that rotates along a diametral axis thereof into a circular section valve seat, from a closed position of the valve, that is with the disc placed transversely to the flow, to a complete open position that is with the disc rotated in the direction of flow that is with the disc rotated by 90° with respect to the closed position.

As the disc rotates from its closed position (0°) to its maximum open position (90°), when seen in the direction of flow and/or of the valve seat, it takes a profile from a circular one to an elliptical one with constant major axis substantially equal to the diameter of the valve seat and the minor axis reducing its length. The trend of the surface of the fluid passage slots varies in a non-linear manner with a low slope initial portion as the rotation angle varies. This leads to a low sensitivity and a low progressivity in the opening action as the angle varies.

DE19732344A1 discloses a butterfly valve with two offset portions.

The aim of the present invention is to provide a butterfly valve that at least partially overcomes such drawbacks obtaining apertures greater than those of the known valves the rotation angle of the shaft being equal, guaranteeing a more linear and progressive trend thereof.

The invention achieves the aim by providing a valve as described hereinbefore wherein the closure member has portions offset in an opposite direction with respect to a plane passing by the axis of rotation of the diametral shaft. Thus, in the closed position, there is provided a forward wall and a backward wall with respect to the axis of rotation in the direction of flow that allow greater fluid passage slots to be obtained, the rotation axis being equal.

The closure member has substantially the shape of a disc divided into two parts that, in the closed position of the valve, are arranged at the front and at the back respectively with respect to a transverse plane passing by the axis of rotation.

The closure member comprises two half-discs joined by a central wall that, with the valve in the closed position, is oriented according to an angle of 45° with respect to the direction of flow and/or of the axis of the valve seat, the two half-discs being arranged on the opposite sides of said wall in a position transversal to the direction of flow and/or to the axis of the valve seat.

Further characteristics and improvements are the subject matter of the sub claims.

The characteristics of the invention and the advantages deriving therefrom will be more clear from the following detailed description of the annexed figures, wherein:

Fig.1 is a perspective view of a butterfly valve according to prior art.
Fig.2 is an exemplary profile taken by the closure member, with the valve in the partial open position, when seen according to the direction of flow.
Fig.3 is a section according to a median plane transversal to the axis of the valve of fig.1 in two configurations: valve with the closure member closed (top) and valve with the closure member rotated by 10° with respect to the closed position (bottom).
Fig.4 is a section according to a median plane transversal to the axis of the valve according to an example not covered by the invention. As in the previous figure, it shows the valve with the closure member closed (top) and the valve with the closure member rotated by 10° with respect to the closed position (bottom).
Figs. 5, 6 and 7 are how the surfaces of the fluid passage slots vary for three different rotation angles of the control shaft in a valve of the conventional type (top) and in a valve according to the invention (bottom).
Fig.8 is how the surface of the fluid passage slots varies, as a percentage with respect to the maximum value, of a closure member of the conventional type and of a closure member with offset surfaces according to the invention, as a function of the rotation angle of the control shaft expressed as a percentage with respect to the value of 90° corresponding to the complete open condition. The figure shows also an ideal linear target trend.
Figs.9 and 10 are two possible profiles for the closure member of the valve according to examples not covered by the invention.

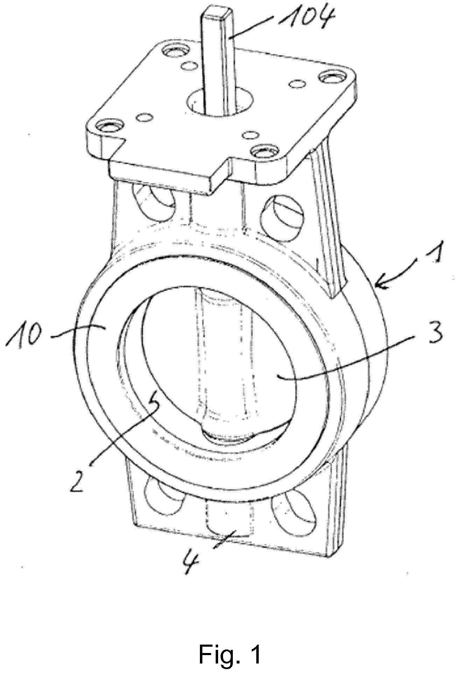

With reference to figure 1, butterfly valves according to prior art comprise a valve body 1, wherein a substantially cylindrical shaped passageway 2 is provided. The passageway forms a valve seat 10 with which a disc-like butterfly closure member 3 cooperates. A transverse shaft 4, that is perpendicular to the passageway, is radially fastened to the butterfly closure member protruding from the peripheral edge thereof on both the diametrically opposite sides, while one of the two ends of the control shaft 4 protrudes outwardly by a non-round grasping end 104 to which a lever for hand operation or the member of a motorized actuator is connectable.

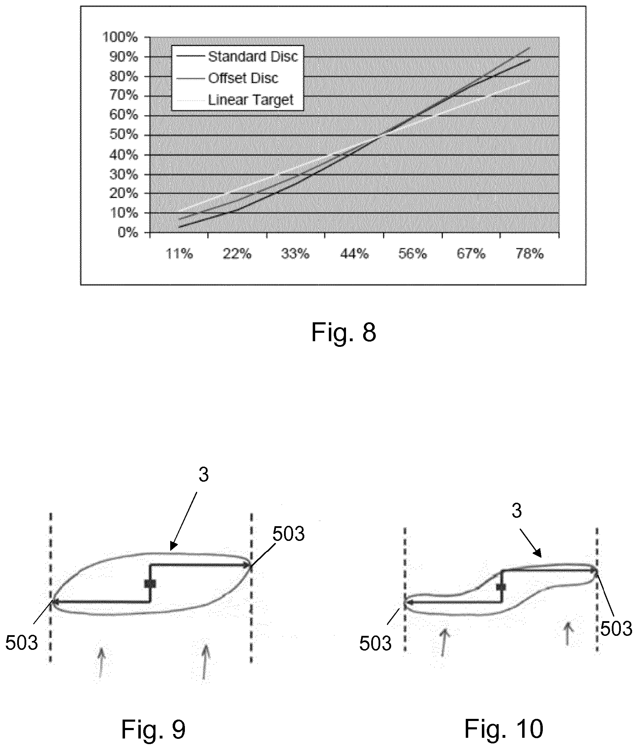

In a position coinciding with the closure member being in a position perpendicular to the axis of the passageway 2, the valve seat 10 has a substantially annular seal that is housed within an annular groove in the wall of the passageway 2 and that cooperates with the head peripheral edge of the butterfly closure member. The said head peripheral edge 103 of the butterfly closure member 3 (see fig. 9 and 10) is shaped as a chamfered apex formed at the intersection of the surfaces of the two sides of the butterfly closure member 3. In this embodiment the apex is chamfered or rounded in order not to exercise a cutting action on the surface of the anular sealing when the butterfly closure member 3 is in the position closing the passageway delimited peripherically by the annuklar seal.

According to a further feature the outer diameter outer diameter of the butterfly closure member 3 is dimensioned such that in the closing position the said head peripheral edge 503 interferes with the inner annular surface of the annular seal defining the passageway 2 inner diameter the said inner anular surface of the seal being tanget to the said chamfered peripheral head edge.

In an alternative embodiment, the diameter of the butterfly closure member and particulalrly of the head peripheral edge of the said butterfly closure member is slightly largenr than the diamenter of the inner surface of the said seal so that in the closure position the butterfly closure member 3 is positioned with the said head peripheral edhe 503 slightly penetrating inside the said iner annular sufface. In this condition the peripheral edge of the closure member compresses the annular sela in radial outward direction, thereby deforming elastically the seal and penetrating for a certain measure inside the seal.

Thus according to the above embodiments in a more general way the butterfly closure member 3 has a head peripheral edge cooperating in closed condition with the interna annular surface of an annular seal. The cross section of the head peripheral edge 503 according to a diametral plane oriented in flux direction having a shape of a chamfered apex generated by the converging peripheral ends of the surfaces of the two sides of the said butterfly closure member and the said head peripheral edge cooperting with the annular seal for closing the passageway 2. In the closed position the inner surface of the annular seal is tangent or secant to the said head peripheral edge.

According to a further embodiment, the outer diamenetr of the butterfly closure member is slightly smaller than the inner diameter of the passageway.

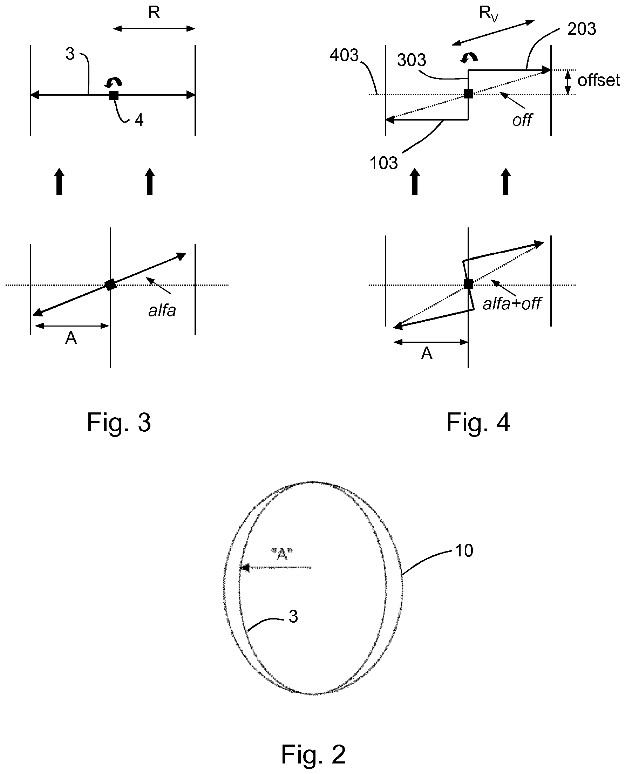

The valve seat 10 and the closure member 3 typically have a circular section. By the rotation from a closed position to a complete open position, the closure member 3 takes a profile from a circular one to an elliptical one when seen in the direction of flow and/or of the valve seat with the constant major axis substantially equal to the diameter of the valve seat and the minor axis reducing its length A as the valve opens such to create an increasing passage port between the closure member and the valve seat such as shown in an exemplary manner in fig. 2.

Fig.3 shows a section according to a median plane transversal to the axis of the valve of fig.1 in two configurations: valve with closed closure member (top) and valve with closure member rotated by 10° with respect to the closed position (bottom). The arrows denote the flow direction while the vertical segments denote the inner edge of the passageway.

By denoting with A the semiaxis of the ellipse namely the projection of half the median axis of the disc on the straight line transversal to the direction of flow, with R the radius of the passageway and with *alpha* the rotation angle of the control shaft, *alpha=0* corresponding to the closed position, it results that $A = R \cdot cos(alfa)$.

For example this implies that for diameters of the passageway of 100 mm, as the *alpha* rotation angle varies it results that:

| *Alpha* angle | Swing % | A mm | Aperture % |
|---|---|---|---|
| 10° | 11 | 49,24 | 3 |
| 20° | 22 | 46,98 | 12 |
| 30° | 33 | 43,30 | 25 |
| 40° | 44 | 38,30 | 41 |
| 50° | 56 | 32,14 | 59 |
| 60° | 67 | 25,00 | 75 |
| 70° | 78 | 17,10 | 88 |

where $Swing\% = \dfrac{alfa}{90} \cdot 100$ and *Aperture%* is the ratio of the fluid passage surface to the area of the section of the passageway as a function of the *alpha* angle.

As it can be noted, aperture and swing have not a linear behavior with, particularly, an initial low slope knelt portion. This implies that for obtaining apertures only of 12% it is necessary to have a rotation equal to about a quarter of the maximum amplitude.

The inventor has noted how, by changing the shape of the closure member, it is possible to considerably increase the aperture of the valve, the rotation angles of the shaft being equal. Particularly, if step-like structures are used instead of considering discs, it is possible to obtain apertures greater even by 4-5% per swing up to 45%.

Fig.4 shows a section according to a median plane transversal to the axis of the valve according to an example not covered by the invention in the same two configurations as in fig.3: valve with closed closure member (top) and valve with closure member rotated by 10° with respect to the closed position (bottom). In this case the median axis of the closure member is not more a segment, but it is like a zed namely the closure member has portions offset in opposite direction with respect to a plane passing by the axis of rotation of the diametral shaft such that, in the closed position, there is provided a forward wall 103 and a backward wall 203 with respect to the axis of rotation 4 in the direction of flow.

The head peripheral edge of the closure member, with the valve in the closed position, advantageously adheres with the seal of the valve seat by circular or elliptical section sealing lips having the centers offset and placed in diametrically opposite positions with respect to the axis of rotation.

In practice the closure member has the shape of a disc divided into two parts 103, 203 that, in the closed condition of the valve, are placed at the front and at the back respectively with respect to a transverse plane 403 passing by the axis of rotation.

In the specific configuration shown in fig.4, the closure member comprises two half-discs joined by a central wall 303 that, with the valve in the closed position, is oriented in the direction of flow and/or of the axis of the valve seat. Obviously the central wall 303 may also have different inclinations, for example ranging from 0° to 45°, with respect to the flow, that allow the two half-discs to be arranged on the opposite sides of the same wall in a position transversal to the direction of flow and/or to the axis of the valve seat. This in order to optimize the dimensions of the fluid passage slots.

The closure member 3 of the valve according to the invention can advantageously be a solid body made as one piece, with the sealing lip offset on opposite sides with respect to a plane 403 passing by the axis of rotation of the diametral shaft 4 such as shown in fig.9.

As regards the shape, a flattened profile of the closure member 3 substantially following the configuration of a Z or a step, such as shown in fig.10, is particularly suitable to reduce flow turbulences with the valve in half-open condition.

With reference again to fig.4, we see how the concept at the base of the invention to make the closure member with parts offset with respect to the direction of flow allows the flow to be increased, the opening angle being the same.

In the exemplary case shown in the figure, the median section of the disc has the configuration of a Z that is it has a central portion 303 in the flow direction and two side portions 103, 203 perpendicular to the central portion and offset to the front and to the back by an amount *offset* to form a step. The straight line joining the diametrically opposite head peripheral edges of the closure member intercepts an *off* angle with the plane perpendicular to the axis of the passageway whose section is shown in the figure by the broken horizontal segment 403. $R_v$ denotes the virtual radius of the closure member that is half the distance between the diametrically opposite head peripheral edges thereof.

Still denoting with A the minor semi-axis of the ellipse that is the projection of half the median axis of the disc on the straight line transversal to the flow direction, with R the radius of the passageway and with *alpha* the rotation angle of the control shaft, *alpha=0* corresponding to the closed condition, it results that:

$$A = R_v \cdot \cos(off + alfa)$$

This implies that for example for diameters of the passageway of 100 mm and an off angle of 17° corresponding to an *offset* of 15 mm, as the *alpha* rotation angle varies it results that:

| Alpha angle | Swing % | A mm | Aperture % |
|---|---|---|---|
| 10° | 11 | 46,54 | 7 |
| 20° | 22 | 41,73 | 17 |
| 30° | 33 | 35,65 | 29 |
| 40° | 44 | 28,48 | 43 |
| 50° | 56 | 20,45 | 59 |
| 60° | 67 | 11,80 | 76 |
| 70° | 78 | 2,79 | 94 |

where $Swing\% = \dfrac{alfa}{90} \cdot 100$ and Aperture% is the ratio of the fluid passage surface to the area of the section of the passageway as a function of the *alpha* angle as seen above.

By comparing such table with the previous one about a conventional valve, it is possible to note how, with the rotation angle of the control shaft being the same, greater apertures can be obtained, particularly in the initial portion that is with angles smaller than 45°.

The graph shown in fig.8 shows how the fluid passage surface varies, as a percentage with respect to the maximum value, as a function of the rotation angle of the control shaft expressed as a percentage with respect to the value of 90° corresponding to the complete open condition, in a closure member of the conventional type, in one with offset surfaces according to the invention and with reference to an ideal linear arrangement.

As it can be noted, the disc with offset surfaces has a curve that is always above the one of the corresponding conventional disc expect for the intersection value obtained with an opening angle of 50° (56%). For higher values the two curves are almost superimposed, while for smaller values there is a considerable deviation particularly for angles smaller than 30° (33%).

The optimal offset of the portions of the closure member with respect to a median transverse plane passing by the axis of rotation is equal to 5%-20%, particularly 10%-15% of the diameter of the valve seat.

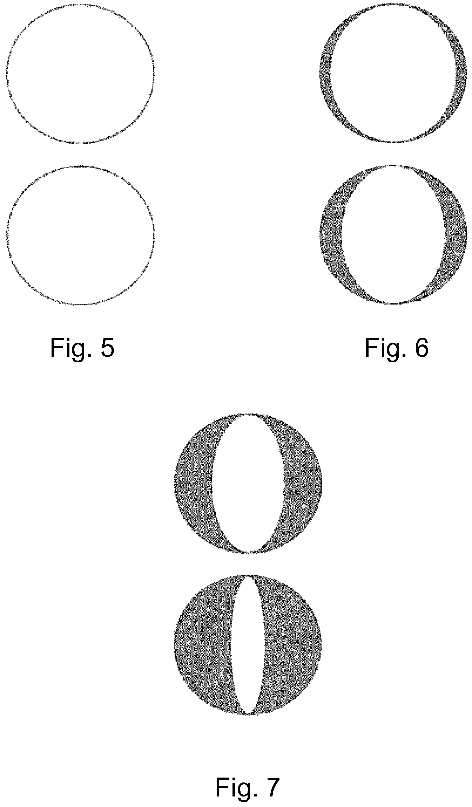

Figures 5, 6 and 7 qualitatively show how the fluid passage port varies with the conventional disc valve (top) and with the step-like disc valve with *offset* equal to 15 mm (bottom) with a diameter of the passageway of 100 mm, with rotation angle equal to 0°, 30° and 60° respectively.

The valve according to the invention can be widely changed from a constructional point of view. For example it is possible to provide the seals to be arranged such to act with a compression force in a direction transversal to the direction of flow and/or to the axis of the valve seat against the head peripheral edge of the closure member or in combination, with a given compression force in the direction of flow against a front peripheral band. The same is valid for the configuration of the closure member that can be a disc in its simplest version, but also a body with a more complicated development to improve the fluid dynamics in particular with the valve in semi-open condition. Also the axis of the closure member has not to be necessarily centered, but it can be eccentric such to compensate for flow turbulence situations. All without departing from the teaching principle disclosed above and claimed below.

The butterfly valve according to the present invention is particulary intended for opening and closing passageways in water plants or similar.

## Claims

1. Butterfly valve comprising a butterfly closure member (3) cooperating with a valve seat (10), which valve seat has a substantially annular seal that, with the closure member in the closed position, adheres by a given compression force in the direction transversal to the direction of flow and/or to the axis of the valve seat against the head peripheral edge of the closure member and/or by a given compression force in the direction of flow against a front peripheral band, a diametral shaft (4) rotatably supporting the closure member (3) from a closed position wherein the closure member is placed transversely to the direction of flow and/or to the axis of the valve seat (10) to a maximum open position with the closure member rotated by 90° with respect to said closed position, **characterized in that** the closure member has portions (103, 203) offset in an opposite direction with respect to a plane (403) passing by the axis of rotation of the diametral shaft (4), such that, in the closed position, the closure member (3) has a forward wall (103) and a backward wall (203) with respect to the axis of rotation in the direction of flow, said portions (103, 203) being two half-discs (103, 203) joined by a central wall (303) that, with the valve in the closed position, is oriented according to an angle of 45°, with respect to the direction of flow and/or of the axis of the valve seat (10), the two half-discs being arranged on the opposite sides of said wall (303) in a position transversal to the direction of flow and/or to the axis of the valve seat (10), wherein the closure member (3) has a substantially Z or step-like section according to a plane perpendicular to the axis of rotation, wherein the closure member (3) has a flattened profile that substantially follows the configuration of a Z or a step to reduce flow turbulences with the valve in semi-open condition, and wherein the offset of the closure member portions (103, 203) with respect to a transverse median plane passing by the axis of rotation (403) is in a range from 10% to 15% of the diameter of the valve seat (10), wherein the head peripheral edge cooperates in closed condition with the internal annular surface of an annular seal; wherein the cross section of the head peripheral edge (503) according to a diametral plane oriented in flux direction has a shape of a chamfered apex generated by the converging peripheral ends of the surfaces of the two sides of the said butterfly closure member; wherein said head peripheral edge cooperates with the annular seal for closing the passageway (2); wherein in the closed position the inner surface of the annular seal is tangent or secant to the said head peripheral edge.

2. Valve according to claim 1, wherein the valve seat (10) has a circular section, the closure member (3) taking an elliptical profile when seen according to the direction of flow and/or of the valve seat with constant major axis substantially equal to the diameter of the valve seat, the minor semiaxis (A) reducing its length as the valve opens such to create an increasing passage port between the closure member (3) and the valve seat (10) wherein *alpha* being the rotation angle of the shaft of the closure member with *alpha=0* corresponding to the closed valve, *off* being the offset angle comprised between the line joining the diametrically opposite head peripheral edges of the closure member and the plane perpendicular to the axis of rotation with the valve closed, $R_v$ being half the distance between said head peripheral edges, the minor semiaxis A of the ellipse is given by the following formula:

$$A = R_v \cdot \cos(off + alfa)$$

3. Valve according to claim 2, wherein for a diameter of the valve seat (10) of 100 mm, an offset of the closure member portions (103, 203) of 15 mm, the fluid passage port with respect to the situation of complete opening of the valve varies according to the following table as a function of the rotation angle of the shaft:

| Angle | % aperture |
|-------|------------|
| 10° | 7 |
| 20° | 17 |
| 30° | 29 |
| 40° | 43 |
| 50° | 59 |
| 60° | 76 |
| 70° | 94 |

**4.** Valve according to anyone of the preceding claims 1 to 3, wherein the head peripheral edge of the closure member (3), with the valve in the closed position, adheres with the seal of the valve seat by circular or elliptical section sealing lips having the centers offset and placed in diametrically opposite positions with respect to the axis of rotation.

**Patentansprüche**

**1.** Drosselventil umfassend
ein mit einem Ventilsitz (10) zusammenwirkendes Klappenverschlussglied (3), das eine im wesentlichen ringförmige Dichtung aufweist, die bei geschlossenem Verschlussglied mit einer bestimmten Druckkraft quer zur Strömungsrichtung und/oder zur Achse des Ventilsitzes an der Kopfumfangskante des Verschlussgliedes und/oder mit einer bestimmten Druckkraft in Strömungsrichtung an einem Stirnumfangsband anhaftet,
eine diametrale Welle (4), die das Verschlussglied (3) schwenkbar von einer geschlossenen Stellung, in der das Verschlussglied quer zur Strömungsrichtung und/oder zur Achse des Ventilsitzes (10) angeordnet ist, in eine maximal geöffnete Stellung, in der das Verschlussglied um 90° gegenüber der genannten geschlossenen Stellung gedreht ist, trägt, **dadurch gekennzeichnet, dass** das Verschlussglied Abschnitte (103, 203) aufweist, die in einer entgegengesetzten Richtung in Bezug auf eine durch die Drehachse der diametralen Welle (4) verlaufende Ebene (403) versetzt sind, so dass das Verschlussglied (3) in der geschlossenen Stellung eine bezüglich der Drehachse in Strömungsrichtung vorgesetzte Wand (103) und eine zurückversetzte Wand (203) aufweist, wobei die Abschnitte (103, 203) zwei Halbscheiben (103, 203) sind, die durch eine zentrale Wand (303) verbunden sind, welche bei geschlossenem Ventil unter einem Winkel von 45° bezüglich der Strömungsrichtung und/oder der Achse des Ventilsitzes (10) ausgerichtet ist, wobei die beiden Halbscheiben auf den gegenüberliegenden Seiten der Wand (303) in einer Stellung quer zur Strömungsrichtung und/oder zur Achse des Ventilsitzes (10) angeordnet sind, wobei das Verschlussglied (3) einen im Wesentlichen Z- oder stufenförmigen Querschnitt gemäß einer zur Drehachse senkrechten Ebene aufweist, wobei das Verschlussglied (3) ein abgeflachtes Profil aufweist, das im Wesentlichen der Gestalt eines Z oder einer Stufe folgt, um Strömungsturbulenzen im halboffenen Zustand des Ventils zu reduzieren, und wobei der Versatz der Verschlussgliedabschnitte (103, 203) bezüglich einer durch die Drehachse (403) verlaufenden Quermittelebene in einem Bereich von 10% bis 15% des Durchmessers des Ventilsitzes (10) liegt, wobei die Kopfumfangskante im geschlossenen Zustand mit der inneren Ringfläche einer Ringdichtung zusammenwirkt, wobei der Querschnitt der Kopfumfangskante (503) gemäß einer in Strömungsrichtung orientierten Diametralebene die Form eines abgeschrägten Scheitels aufweist, der durch die konvergierenden peripherischen Oberflächenenden der beiden Seiten des genannten Klappenverschlussglieds erzeugt wird, wobei die Kopfumfangskante mit der Ringdichtung zusammenwirkt, um den Durchgang (2) zu schließen und wobei in der geschlossenen Stellung die Innenfläche der Ringdichtung tangential oder schneidend zu der Kopfumfangskante angeordnet ist.

**2.** Ventil nach Anspruch 1, wobei der Ventilsitz (10) einen kreisförmigen Querschnitt aufweist, wobei das Verschlussglied (3) in Strömungsrichtung und/oder in Richtung des Ventilsitzes gesehen ein elliptisches Profil mit konstanter und im Wesentlichen dem Ventilsitzdurchmesser entsprechender Hauptachse aufweist, die kleinere Achse (A) sich beim Öffnen des Ventils in ihrer Länge derart verringert, dass ein zunehmender Durchlass zwischen dem Verschlussglied (3) und dem Ventilsitz (10) entsteht, wobei alpha der Drehwinkel der Welle des Verschlussglieds mit alpha = 0 entsprechend dem geschlossenen Ventil ist, off der Offset-Winkel ist, der zwischen der Linie, die die diametral gegenüberliegenden Kopfumfangskanten des Verschlussglieds verbindet, und der Ebene senkrecht zur Drehachse bei geschlossenem Ventil eingeschlossen ist, Rv der halbe Abstand zwischen den genannten Kopfumfangskanten ist, und die kleinere Halbachse A der Ellipse durch folgende Formel gegeben ist:

$$A = R_v \cdot \cos(\mathit{off} + \mathit{alfa})$$

**3.** Ventil nach Anspruch 2, wobei bei einem Durchmesser des Ventilsitzes (10) von 100 mm und einem Offset der Verschlussgliedabschnitte (103, 203) von 15 mm, die Fluiddurchlassöffnung mit Bezug auf den vollständigen öffnungszustand des Ventils gemäß folgender Tabelle in Abhängigkeit vom Drehwinkel der Welle variiert:

| Winkel | % Öffnung |
|--------|-----------|
| 10° | 7 |
| 20° | 17 |
| 30° | 29 |
| 40° | 43 |
| 50° | 59 |
| 60° | 76 |
| 70° | 94 |

4. Ventil nach einem der vorhergehenden Ansprüche 1 bis 3, wobei die Kopfumfangskante des Verschlussglieds (3) bei geschlossenem Ventil an der Dichtung des Ventilsitzes durch Dichtlippen mit kreisförmigem oder elliptischem Querschnitt haftet, deren Mittelpunkte versetzt und in diametral entgegengesetzten Stellungen in Bezug auf die Drehachse angeordnet sind.

**Revendications**

1. Vanne papillon comprenant un élément de fermeture à papillon (3) coopérant avec un siège de vanne (10), lequel siège de vanne a un joint d'étanchéité sensiblement annulaire qui, avec l'élément de fermeture en fermée, adhère par une force de compression donnée dans la direction transversale à la direction d'écoulement et/ou à l'axe du siège de vanne contre le bord périphérique de tête de l'élément de fermeture et/ou par une force de compression donnée dans la direction d'écoulement contre une bande périphérique frontale, un arbre diamétral (4) soutenant en rotation l'élément de fermeture (3) depuis une position fermée dans laquelle l'élément de fermeture est placé transversalement à la direction d'écoulement et/ou à l'axe du siège de vanne (10) jusqu'à une position d'ouverture maximale avec l'élément de fermeture tourné de 90° par rapport à ladite position fermée, **caractérisée en ce que** l'élément de fermeture a des portions (103, 203) décalées dans une direction opposée par rapport à un plan (403) passant par l'axe de rotation de l'arbre diamétral (4), de sorte qu'en position fermée, l'élément de fermeture (3) a une paroi antérieure (103) et une paroi postérieure (203) par rapport à l'axe de rotation dans la direction d'écoulement, lesdites portions (103, 203) étant deux demi-disques (103, 203) réunis par une paroi centrale (303) qui, avec la vanne en position fermée, est orienté selon un angle de 45° par rapport à la direction d'écoulement et/ou de l'axe du siège de vanne (10), les deux demi-disques étant disposés sur les côtés opposés de ladite paroi (303) dans une position transversale à la direction d'écoulement et/ou à l'axe du siège de vanne (10), dans laquelle l'élément de fermeture (3) a une section sensiblement en Z ou en gradins selon un plan perpendiculaire à l'axe de rotation, dans laquelle l'élément de fermeture (3) a un profil aplati qui suit sensiblement la configuration à Z ou à gradins afin de réduire les turbulences d'écoulement avec la vanne en condition semi-ouverte, dans laquelle le décalage des portions (103, 203) de l'élément de fermeture par rapport à un plan médian transversal passant par l'axe de rotation (403) est dans une plage de 10% à 15% du diamètre du siège de vanne (10), dans laquelle le bord périphérique de tête coopère en condition fermée avec la surface annulaire interne d'un joint d'étanchéité annulaire; dans laquelle la section transversale du bord périphérique de tête (503), selon un plan diamétral orienté dans la direction du flux, a la forme d'un sommet chanfreiné généré par les extrémités périphériques convergentes des surfaces de deux côtés dudit élément de fermeture à papillon; dans laquelle ledit bord périphérique de tête coopère avec le joint d'étanchéité annulaire pour fermer le passage (2); dans laquelle, en position fermée, la surface interne du joint d'étanchéité annulaire est tangente ou sécante audit bord périphérique de tête.

2. Vanne selon la revendication 1, dans laquelle le siège de vanne (10) a une section circulaire, l'élément de fermeture (3) prenant un profil elliptique lorsque visualisé selon la direction d'écoulement et/ou du siège de vanne avec l'axe constant majeur sensiblement égal au diamètre du siège de vanne, le demi-axe mineur (A) réduisant sa longueur à l'ouverture de la vanne de sorte à créer un orifice de passage croissant entre l'élément de fermeture (3) et le siège de vanne (10) dans laquelle alpha étant l'angle de rotation de l'arbre de l'élément de fermeture avec alpha=0 correspond à la vanne fermée, off étant l'angle de décalage compris entre la ligne joignant les bords périphériques de tête diamétralement opposés de l'élément de fermeture et le plan perpendiculaire à l'axe de rotation avec la vanne fermée, $R_v$ étant la moitié de la distance entre lesdits bords périphériques de tête, le demi-axe mineur A de l'ellipse est donné par la formule suivante:

$$A = R_v \cdot \cos(\mathit{off} + \mathit{alfa})$$

3. Vanne selon la revendication 2, dans laquelle pour un diamètre du siège de vanne (10) de 100 mm, et un décalage (103, 203) des portions de l'élément de fermeture de 15 mm, l'orifice de passage de fluide par rapport à la situation d'ouverture complète de la vanne varie selon le tableau suivant en fonction de l'angle de rotation de l'arbre:

| Angle | % d'ouverture |
|-------|---------------|
| 10°   | 7             |
| 20°   | 17            |
| 30°   | 29            |
| 40°   | 43            |
| 50°   | 59            |
| 60°   | 76            |
| 70°   | 94            |

4. Vanne selon l'une quelconque des revendications 1 à 3, dans laquelle le bord périphérique de tête de l'élément de fermeture (3), avec la vanne en position fermée, adhère avec le joint d'étanchéité du siège de la vanne à travers des rebords d'étanchéité de section circulaire ou elliptique dont les centres sont décalés et placés dans des positions diamétralement opposées par rapport à l'axe de rotation.

Fig. 1

Fig. 3

Fig. 4

Fig. 2

Fig. 5

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19732344 A1